# EUROPEAN PATENT APPLICATION

(11) **EP 3 376 168 A1**
(43) Date of publication of application: **19.09.2018**
(21) Application number: 15908312.0
(22) Date of filing: 12.11.2015
(51) Int. Cl.: G01D 5/244, B25J 19/06, G01D 5/347

(54) **ABNORMALITY DETERMINING SYSTEM FOR DETECTION DEVICE, DETECTION DEVICE, ABNORMALITY DETERMINING DEVICE FOR DETECTION DEVICE, AND ABNORMALITY DETERMINING METHOD FOR DETECTION DEVICE**

(71) Applicant: Okura Yusoki Kabushiki Kaisha, Hyogo 675-8675 (JP)
(72) Inventor: SAWADA, Hideki, Kakogawa-shi Hyogo 675-8675 (JP); SATO, Toshiyuki, Kakogawa-shi Hyogo 675-8675 (JP); ONOYAMA, Tatsuo, Kakogawa-shi Hyogo 675-8675 (JP); OKURA, Ryoichi, Kakogawa-shi Hyogo 675-8675 (JP); KAWAZU, Mugen, Takatsuki-shi Osaka 569-0012 (JP)
(74) Representative: Müller Hoffmann & Partner
(86) International application number: PCT/JP2015/081862
(87) International publication number: WO 2017/081792

(57) **Abstract**

An abnormal condition determination system (1) includes a detection device (300) which detects rotation of each rotation shaft (48) of a robot (30) and an abnormal condition determination device (50) which detects an encoder abnormal condition based on an absolute signal and an incremental signal from the detection device (300). The abnormal condition determination device (50) calculates an absolute angle of the rotation shaft (48) based on an amount of variation in angle of rotation of the rotation shaft (48) indicated by an incremental signal from an incremental encoder (200). The abnormal condition determination device (50) determines the detection device (300) as abnormal when a difference between the absolute angle of the rotation shaft (48) calculated based on the incremental signal and the absolute angle of the rotation shaft (48) indicated by the absolute signal from an absolute encoder (100) is out of an allowable range.

## Description

### TECHNICAL FIELD

The present invention relates to a system for determining an abnormal condition of a detection device which detects rotation of a rotation shaft, a detection device, a device for determining an abnormal condition of a detection device, and a method of determining an abnormal condition of a detection device.

### BACKGROUND ART

A control device which controls operations by a robot based on a signal from a detection device such as an encoder which detects rotation of a rotation shaft of the robot has conventionally been known.

For example, Japanese Patent No. 5271499 (PTD 1) discloses a control device which detects a current position of a robot based on a signal from an encoder and cuts off electric power supply to a drive portion of the robot when the current position of the robot is out of a range of an operation region.

### CITATION LIST

### PATENT DOCUMENT

PTD 1: Japanese Patent No. 5271499

### SUMMARY OF INVENTION

### TECHNICAL PROBLEM

According to the control device disclosed in PTD 1, operations by the robot can be restricted based on a signal from the encoder, however, accurate determination as to an abnormal condition of the encoder is not considered. Therefore, determination as to an abnormal condition of the encoder cannot accurately be made and the robot may malfunction.

The present invention was made in view of the problems above and an object thereof is to provide an abnormal condition determination system capable of accurately determining an abnormal condition of a detection device, a detection device and an abnormal condition determination device included in the abnormal condition determination system, and a method of determining an abnormal condition of a detection device.

### SOLUTION TO PROBLEM

The present invention is directed to a system for determining an abnormal condition of a detection device configured to detect rotation of at least one rotation shaft of a movable apparatus. The abnormal condition determination system includes a detection device and an abnormal condition determination device configured to determine whether or not the detection device is in an abnormal condition based on a signal from the detection device. The detection device includes an incremental encoder portion and an absolute encoder portion in the same housing. The incremental encoder portion is configured to output an incremental signal indicating an amount of variation in angle of rotation of the at least one rotation shaft. The absolute encoder portion is configured to output an absolute signal indicating an absolute angle of the at least one rotation shaft. The abnormal condition determination device is configured to calculate an absolute angle of the at least one rotation shaft based on the amount of variation in angle of rotation of the at least one rotation shaft indicated by the incremental signal from the incremental encoder portion. The abnormal condition determination device is configured to determine that the detection device is in the abnormal condition when a difference between the absolute angle of the at least one rotation shaft calculated based on the incremental signal and the absolute angle of the at least one rotation shaft indicated by the absolute signal from the absolute encoder portion is out of an allowable range.

According to this abnormal condition determination system, an absolute angle of a rotation shaft is calculated based on an amount of variation in angle of rotation of the rotation shaft indicated by an incremental signal from the incremental encoder portion in the detection device. Whether or not the detection device is in the abnormal condition is determined based on comparison between the absolute angle calculated based on the incremental signal and the absolute angle of the rotation shaft indicated by the absolute signal from the absolute encoder portion in the detection device. Since determination as to the abnormal condition of the detection device is thus made by using two detectors different in detection method, determination as to the abnormal condition of the detection device can accurately be made. The detection device includes the incremental encoder portion and the absolute encoder portion in the same housing. Therefore, the two detectors different in detection method can together be arranged in a compact manner and replacement with an already provided encoder is also easy.

Preferably, the incremental encoder portion is configured to output a differential signal including a pulse as the incremental signal. No differential voltage is generated in the incremental signal when an abnormal condition of a signal path between the incremental encoder portion and the abnormal condition determination device occurs. The abnormal condition determination device includes a first input and output portion and a second input and output portion. The first input and output portion is configured to receive the incremental signal from the incremental encoder portion without inverting a polarity thereof and to output a high or low signal based on a differential voltage of the received incremental signal. The second input and output portion is configured to receive the incremental signal from the incremental encoder portion with the polarity thereof being inverted and to output a high or low signal based on a differential voltage of the received incremental signal. The abnormal condition determination device is configured to detect an abnormal condition of the signal path based on a signal from the first input and output portion and a signal from the second input and output portion.

According to this abnormal condition determination system, an abnormal condition of the signal path such as a break and short-circuiting which has occurred in the signal path between the incremental encoder portion and the abnormal condition determination device can be detected by making use of a differential voltage of the incremental signal output from the incremental encoder portion.

Preferably, the incremental encoder portion is configured to output a differential signal including a pulse as the incremental signal. When an abnormal condition of a power supply occurs in the incremental encoder portion, the incremental encoder portion is configured to prevent generation of a differential voltage of the incremental signal by setting a state of output of the incremental signal to a high-impedance state. The abnormal condition determination device includes a first input and output portion and a second input and output portion. The first input and output portion is configured to receive the incremental signal from the incremental encoder portion without inverting a polarity thereof and to output a high or low signal based on a differential voltage of the received incremental signal. The second input and output portion is configured to receive the incremental signal from the incremental encoder portion with the polarity thereof being inverted and to output a high or low signal based on the differential voltage of the received incremental signal. The abnormal condition determination device is configured to detect an abnormal condition of the power supply which has occurred in the incremental encoder portion based on a signal from the first input and output portion and a signal from the second input and output portion.

According to this abnormal condition determination system, an abnormal condition of the power supply which has occurred in the incremental encoder portion can be detected by making use of a differential voltage of the incremental signal output from the incremental encoder portion.

Preferably, the movable apparatus includes a plurality of rotation shafts and an arm configured to operate with rotation of at least one rotation shaft of the plurality of rotation shafts. When the abnormal condition determination device determines that the detection device is in the abnormal condition, while the arm operates with the at least one rotation shaft having rotated, the abnormal condition determination device is configured to predict a moving speed of a tip end portion of the arm under a condition that the tip end portion is farthest from a center of the at least one rotated rotation shaft. When the predicted moving speed of the tip end portion exceeds a speed limit, the abnormal condition determination device is configured to cut off electric power supply to a drive apparatus configured to drive the movable apparatus.

According to this abnormal condition determination system, a moving speed of the tip end portion of the arm is predicted under the condition that one rotation shaft has rotated and the tip end portion is farthest from the center of one rotated rotation shaft. Therefore, the moving speed of the tip end portion can accurately be predicted and a moving speed higher than an actual moving speed of the tip end portion is predicted. Since supply of electric power to the drive apparatus is cut off when the predicted moving speed of the tip end portion exceeds the speed limit, the actual moving speed of the tip end portion does not exceed the speed limit and safety of an operator can be secured.

Preferably, when the abnormal condition determination device determines that the detection device is in the abnormal condition, the abnormal condition determination device is configured to cut off electric power supply to the drive apparatus when two or more rotation shafts rotate.

According to this abnormal condition determination system, when the detection device is determined as abnormal, supply of electric power to the drive apparatus is cut off when two or more rotation shafts rotate. Therefore, the moving speed of the tip end portion of the arm can be predicted under the condition that one rotation shaft has reliably rotated.

Preferably, the absolute encoder portion is configured to detect the absolute angle of the at least one rotation shaft by using a disc configured to rotate with rotation of the at least one rotation shaft. The incremental encoder portion is configured to detect the amount of variation in angle of rotation of the at least one rotation shaft by using the disc which is used by the absolute encoder portion in detection of the absolute angle of the at least one rotation shaft.

According to this abnormal condition determination system, since the disc for the absolute encoder and the disc for the incremental encoder are in common, a substrate can be compact.

The present invention is directed to a detection device configured to detect rotation of a rotation shaft. The detection device includes an incremental encoder portion and an absolute encoder portion in the same housing. The incremental encoder portion is configured to output an incremental signal indicating an amount of variation in angle of rotation of the rotation shaft. The absolute encoder portion is configured to output an absolute signal indicating an absolute angle of the rotation shaft.

According to this detection device, the incremental signal indicating an amount of variation in angle of rotation of the rotation shaft detected by the incremental encoder portion and the absolute signal indicating the absolute angle of the rotation shaft detected by the absolute encoder portion can be output from the same housing. Furthermore, the detection device includes the incremental encoder portion and the absolute encoder portion in the same housing. Therefore, the two detectors different in detection method can together be arranged in a compact manner and replacement with an already provided encoder is also easy.

The present invention is directed to a device configured to determine an abnormal condition of a detection device configured to detect rotation of a rotation shaft. The abnormal condition determination device includes a calculation portion and a determination portion. The calculation portion is configured to calculate an absolute angle of the rotation shaft based on an amount of variation in angle of rotation of the rotation shaft indicated by an incremental signal from an incremental encoder portion included in the detection device. The determination portion is configured to determine that the detection device is in the abnormal condition when a difference between the absolute angle of the rotation shaft calculated by the calculation portion and an absolute angle of the rotation shaft indicated by an absolute signal from an absolute encoder portion included in the detection device is out of an allowable range.

According to the abnormal condition determination device, an absolute angle of a rotation shaft is calculated based on an amount of variation in angle of rotation of the rotation shaft indicated by an incremental signal from the incremental encoder portion in the detection device. Whether or not the detection device is in the abnormal condition is determined based on comparison between the calculated absolute angle and the absolute angle of the rotation shaft indicated by the absolute signal from the absolute encoder portion in the detection device. Since determination as to the abnormal condition of the detection device is thus made by using two detectors different in detection method, determination as to the abnormal condition of the detection device can accurately be made.

The present invention is directed to a method of determining an abnormal condition of a detection device configured to detect rotation of a rotation shaft. The method includes a calculation step and a determination step. In the calculation step, an absolute angle of the rotation shaft is calculated based on an amount of variation in angle of rotation of the rotation shaft indicated by an incremental signal from an incremental encoder portion included in the detection device. In the determination step, the detection device is determined as abnormal when a difference between the absolute angle of the rotation shaft calculated in the calculation step and an absolute angle of the rotation shaft indicated by an absolute signal from an absolute encoder portion included in the detection device is out of an allowable range.

According to this abnormal condition determination method, an absolute angle of a rotation shaft is calculated based on an amount of variation in angle of rotation of the rotation shaft indicated by an incremental signal from the incremental encoder portion in the detection device. Whether or not the detection device is in the abnormal condition is determined based on comparison between the calculated absolute angle and an absolute angle of the rotation shaft indicated by an absolute signal from the absolute encoder portion in the detection device. Since determination as to the abnormal condition of the detection device is thus made by using two detectors different in detection method, determination as to the abnormal condition of the detection device can accurately be made.

### BRIEF DESCRIPTION OF DRAWINGS

Fig. 1 is a diagram showing one example of a layout configuration in a factory where a robot operates.
Fig. 2 is a diagram showing a mechanical construction of the robot viewed from above and laterally.
Fig. 3 is a diagram showing an overall configuration of an abnormal condition determination system.
Fig. 4 is a diagram showing an encoder disc viewed laterally and from the front.
Fig. 5 is a timing chart showing a pulse waveform of an A-phase signal and a B-phase signal when a rotation shaft rotates in a forward direction.
Fig. 6 is a timing chart showing a pulse waveform of an A-phase signal and a B-phase signal when the rotation shaft rotates in a reverse direction.
Fig. 7 is a diagram for illustrating an internal configuration of a signal input portion.
Fig. 8 is a diagram showing a first receiver.
Fig. 9 is a diagram showing a truth-value table of the first receiver.
Fig. 10 is a flowchart showing one example of encoder abnormal condition determination processing performed by an abnormal condition determination device.
Fig. 11 is a diagram for illustrating calculation of a moving speed of a tool while only rotation around an O axis is permitted.
Fig. 12 is a flowchart showing one example of processing in an encoder abnormal condition performed by the abnormal condition determination device.
Fig. 13 is a diagram for illustrating an internal configuration of a signal input portion.
Fig. 14 is a diagram showing a first receiver and a second receiver.
Fig. 15 is a diagram showing a truth-value table of the first receiver and the second receiver.
Fig. 16 is a flowchart showing one example of specific abnormal condition determination processing performed by the abnormal condition determination device.

### DESCRIPTION OF EMBODIMENTS

An embodiment of the present invention will be described in detail with reference to the drawings. The same or corresponding elements in the drawings referred to have the same reference characters allotted and description thereof will not be repeated.

### [Layout Configuration in Factory and Operations by Robot]

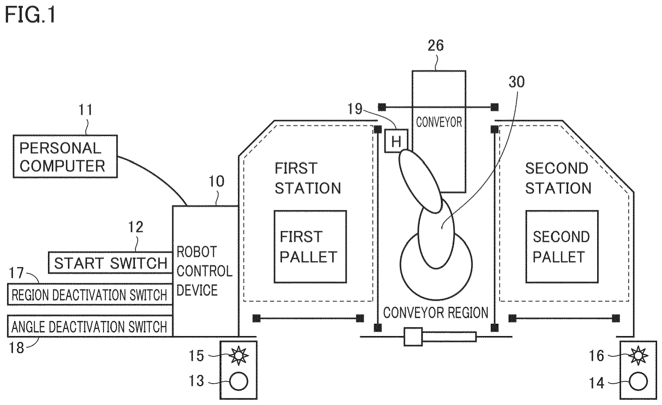

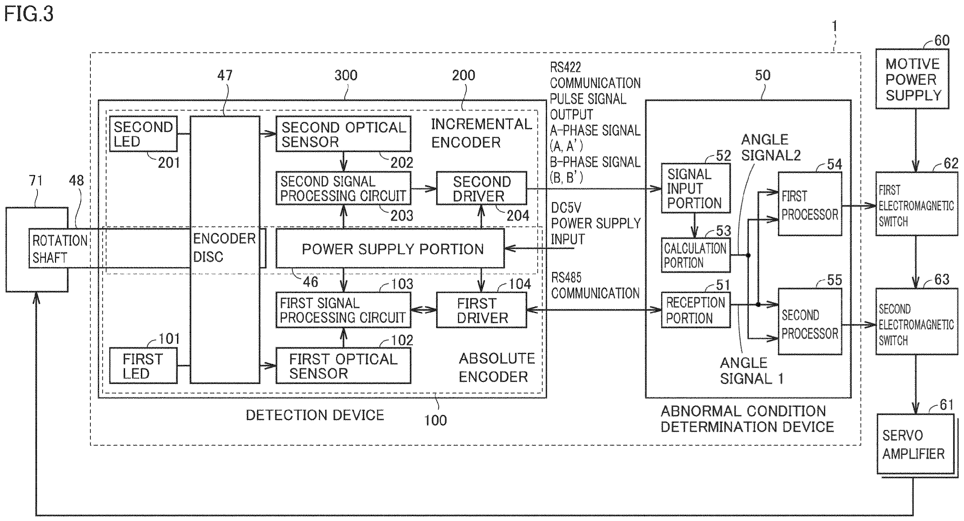

A layout configuration in a factory and operations by a robot 30 will be described with reference to Figs. 1 and 3. Fig. 1 is a diagram showing one example of a layout configuration in a factory where robot 30 operates. Fig. 3 is a diagram showing an overall configuration of an abnormal condition determination system 1.

As shown in Fig. 1, a conveyor region is provided in the factory. In the conveyor region, a conveyor 26 which conveys objects to be conveyed is installed. A first station and a second station are provided on opposing sides of the conveyor region. A first pallet on which objects conveyed by conveyor 26 are loaded by robot 30 is installed in the first station. A second pallet on which objects conveyed by conveyor 26 are loaded by robot 30 is installed in the second station.

A robot control device 10 is installed around the first station. Robot control device 10 is a device configured to control operations by robot 30. Robot control device 10 has a region monitoring function, an angle monitoring function, and an encoder check function.

The region monitoring function is a function to restrict operations by robot 30 such that robot 30 operates only within a prescribed region. With the region monitoring function, operations by robot 30 are restricted such that, in a region where robot 30 can operate (which is also referred to as an operation region), robot 30 operates within a range of a monitored operation region (which is also referred to as a monitored region). Specifically, with the region monitoring function, an example in which supply of electric power to a servo amplifier 61 shown in Fig. 3 is cut off at prescribed periodic intervals (for example, every 10 msec.) is assumed. Servo amplifier 61 is a drive apparatus configured to rotate a rotation shaft 48 by driving a motor 71 included in robot 3 as shown in Fig. 3. When supply of electric power is cut off, rotation shaft 48 of motor 71 rotates through inertia in what is called a free-wheeling state. With the region monitoring function, a position of robot 30 after rotation shaft 48 rotates in the free-wheeling state is predicted at prescribed periodic intervals. When it is determined that the predicted position of robot 30 will not be within the monitored region, supply of electric power to servo amplifier 61 is cut off.

The operation region can be set in advance by an operator through a personal computer 11. In the present embodiment, an operation region corresponding to the conveyor region, an operation region corresponding to the conveyor region and a region including the first station, and an operation region corresponding to the conveyor region and a region including the second station are set in advance.

For example, when the conveyor region and the region including the first station are set as the monitored region, operations by robot 30 are restricted by the region monitoring function of robot control device 10 such that robot 30 operates within the first station. Since robot 30 thus does not move out of the conveyor region and the region including the first station, the operator can safely proceed with operations outside the conveyor region and the region including the first station.

With the region monitoring function, even when the operator enters the monitored region from the outside, supply of electric power to servo amplifier 61 is cut off.

The angle monitoring function is a function to monitor rotation of rotation shaft 48 of motor 71. Specifically, with the angle monitoring function, a current absolute angle of rotation shaft 48 is detected at prescribed periodic intervals (for example, every 10 msec.). When the absolute angle of rotation shaft 48 is determined as not being within a restricted range set in advance, supply of electric power to servo amplifier 61 is cut off. With the angle monitoring function, an absolute angle after rotation of rotation shaft 48 in the free-wheeling state is predicted at prescribed periodic intervals. When the predicted absolute angle is determined as not being within the restricted range set in advance, supply of electric power to servo amplifier 61 is cut off. Detection of an absolute angle of rotation shaft 48 will be described later.

The encoder check function is a calibration function to calibrate an absolute angle of rotation shaft 48 recognized by robot 30 and an actual absolute angle of rotation shaft 48. Specifically, with the encoder check function, when robot 30 is located around an encoder check switch 19 provided in the conveyor region, an absolute angle of rotation shaft 48 detected by an absolute encoder 100 shown in Fig. 3 and an actual absolute angle of rotation shaft 48 stored in advance in robot control device 10 are compared with each other. When a difference between the absolute angle detected by absolute encoder 100 and the absolute angle stored in advance is within an allowable range, the absolute angle detected by absolute encoder 100 can be determined as indicating a correct value. In this case, an absolute angle calculated based on an amount of variation in angle of rotation (which can also be expressed as an amount of rotation, a direction of rotation, a relative angle, and a speed of rotation) of rotation shaft 48 detected by an incremental encoder 200 shown in Fig. 3 is calibrated with an absolute angle detected by absolute encoder 100. When a difference between the absolute angle detected by absolute encoder 100 and the absolute angle stored in advance is out of the allowable range, the absolute angle detected by absolute encoder 100 is determined as abnormal. In this case, the operator calibrates the absolute angle detected by absolute encoder 100 through personal computer 11 or a control panel provided in robot control device 10.

As will be described later in connection with processing in an encoder abnormal condition, the encoder check function may be performed by movement of robot 30 to the vicinity of encoder check switch 19 caused by robot control device 10 while power of robot 30 is turned on or by manual movement of robot 30 to the vicinity of encoder check switch 19 by an operator while power of robot 30 is not turned on. Incremental encoder 200 and absolute encoder 100 may be calibrated in the field through personal computer 11 without moving robot 30 to the vicinity of encoder check switch 19.

As shown in Fig. 1, a start switch 12, loading start switches 13 and 14, loading completion indicators 15 and 16, a region deactivation switch 17, and an angle deactivation switch 18 are connected to robot control device 10 through lines (which are not shown).

Start switch 12 is a switch operated when an operator starts up robot 30. When start switch 12 is operated, the conveyor region is set as the monitored region and robot 30 is started in the conveyor region.

Loading start switches 13 and 14 are switches operated when an operator operates robot 30 to have the robot load objects conveyed by conveyor 26 on a pallet. When loading start switch 13 is operated, the conveyor region and the region including the first station are set as the monitored region, and robot 30 starts to load objects conveyed by conveyor 26 onto the first pallet in the first station within the conveyor region and the region including the first station. When loading start switch 14 is operated, the conveyor region and the region including the second station are set as the monitored region and robot 30 starts to load objects conveyed by conveyor 26 onto the second pallet in the second station within the conveyor region and the region including the second station.

Loading completion indicators 15 and 16 are indicators which notify an operator of completion of loading operations by robot 30 by illuminating or blinking. Region deactivation switch 17 is a switch operated when an operator deactivates the region monitoring function of robot control device 10. Angle deactivation switch 18 is a switch operated when the operator deactivates the angle monitoring function of robot control device 10.

### [Mechanical Construction of Robot]

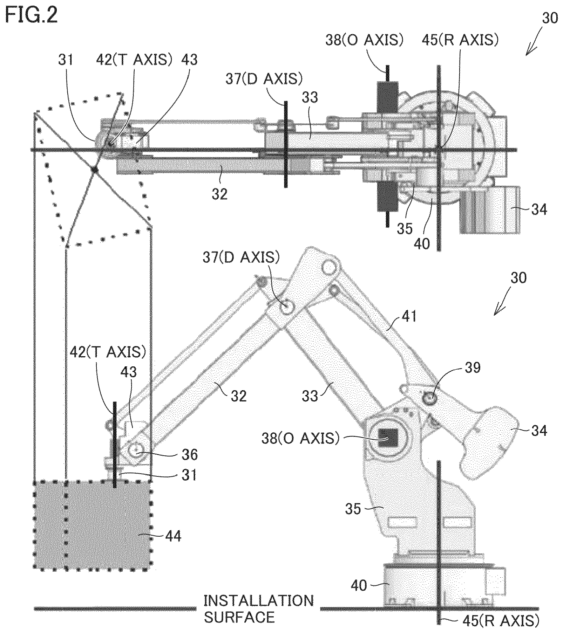

A mechanical construction of the robot will be described with reference to Fig. 2. Fig. 2 is a diagram showing a mechanical construction of robot 30 viewed from above and laterally. The mechanical construction of robot 30 shown in Fig. 2 is by way of example and the robot may be a robot mechanically constructed otherwise.

Robot 30 in the present embodiment is what is called a vertical articulated robot, and includes a cylindrical installation stage 40 fixed to an installation surface, a main body portion 35 provided on an upper surface of installation stage 40, a lower arm 33 connected to main body portion 35, a support arm 41 connected to main body portion 35 together with lower arm 33, a weight 34 connected to support arm 41, an upper arm 32 connected to lower arm 33 and support arm 41, a link 43 connected to upper arm 32, a tool 31 connected to link 43, and an end effector 44 provided at a tip end of tool 31. A shape of end effector 44 is shown in a simplified manner in Fig. 2.

Main body portion 35 is connected to a rotation shaft of a motor (a rotation shaft along an axis 45) attached to installation stage 40. Lower arm 33 is connected to a rotation shaft of a motor (a rotation shaft along an axis 38) attached to main body portion 35. Upper arm 32 is connected to a rotation shaft of a motor (a rotation shaft along an axis 37) attached to support arm 41. Tool 31 is connected to a rotation shaft of a motor (a rotation shaft along an axis 42) attached to link 43. Each motor and each rotation shaft correspond to motor 71 and rotation shaft 48 shown in Fig. 3 which will be described later, respectively. Each motor and each rotation shaft are not shown in Fig. 2.

In the following, for the sake of convenience of description, axis 45, axis 38, axis 37, and axis 42 are referred to as an R axis, an O axis, a D axis, and a T axis, respectively. Lower arm 33 and upper arm 32 are also simply referred to as an arm.

Main body portion 35 rotates around the R axis with rotation of the rotation shaft. With rotation of main body portion 35, the arm and end effector 44 move in parallel to the installation surface.

Lower arm 33 pivots around the O axis with rotation of the rotation shaft. Upper arm 32 pivots around the D axis with rotation of the rotation shaft. With pivot of lower arm 33 around the O axis or pivot of upper arm 32 around the D axis, end effector 44 moves toward or away from the R axis. For example, when lower arm 33 and upper arm 32 are closer to a state parallel to the installation surface, a distance between the R axis and end effector 44 is gradually longer, and when lower arm 33 and upper arm 32 are closer to a state perpendicular to the installation surface, a distance between the R axis and end effector 44 is gradually shorter.

Weight 34 mitigates loads applied to the O axis and the D axis. Though weight 34 is fixed to support arm 41 with a bolt 39, it moves with pivot of the arm.

Tool 31 has a flange surface always facing down owing to a mechanism of link 43. Tool 31 rotates around the T axis with rotation of the rotation shaft. With rotation of tool 31 around the T axis, end effector 44 rotates in parallel to the installation surface.

Robot 30 can thus move end effector 44 to a desired position by moving main body portion 35, the arm, and tool 31. End effector 44 can hold a conveyed object and load the object on a pallet.

Robot 30 corresponds to one embodiment of the "movable apparatus." Rotation shaft 48 corresponds to one embodiment of the "rotation shaft." Lower arm 33 and upper arm 32 correspond to one embodiment of the "arm". Tool 31 corresponds to one embodiment of the "tip end portion."

### [Encoder Abnormal Condition Determination Processing]

On each shaft of robot 30 described above, absolute encoder 100 included in a detection device 300 which will be described later detects an absolute angle of rotation shaft 48. Robot control device 10 controls servo amplifier 61 based on the absolute angle of rotation shaft 48 detected by absolute encoder 100 to have robot 30 operate. Robot control device 10 performs the region monitoring function and the angle monitoring function based on the absolute angle of rotation shaft 48 detected by absolute encoder 100.

If such an abnormal condition that the absolute angle of rotation shaft 48 detected by absolute encoder 100 is different from an actual absolute angle of rotation shaft 48 (which is also referred to as an encoder abnormal condition) occurs, robot control device 10 will control robot 30 based on a detection value different from an actual state and robot 30 may malfunction.

Therefore, in the present embodiment, incremental encoder 200 is provided in detection device 300 in addition to absolute encoder 100 as means for detecting rotation of rotation shaft 48. Two detectors of absolute encoder 100 and incremental encoder 200 which are different in detection method are used to make determination as to an encoder abnormal condition of detection device 300. An absolute angle of rotation shaft 48 detected by absolute encoder 100 and an absolute angle of rotation shaft 48 calculated based on detection by incremental encoder 200 are compared with each other, and when a difference therebetween is out of an allowable range, the absolute angle of rotation shaft 48 detected by absolute encoder 100 may be different from the actual absolute angle of rotation shaft 48. In this case, it is determined that an encoder abnormal condition has occurred.

Detection device 300 corresponds to one embodiment of the "detection device." Determination as to an encoder abnormal condition of detection device 300 will be described below. Fig. 3 shows only abnormal condition determination system 1 provided for one of a plurality of shafts (the R axis, the O axis, the D axis, and the T axis) of robot 30. A feature the same as abnormal condition determination system 1 shown in Fig. 3 is provided also for other shafts.

As shown in Fig. 3, abnormal condition determination system 1 includes detection device 300 configured to detect rotation of rotation shaft 48 of motor 71 and an abnormal condition determination device 50 configured to determine whether or not detection device 300 is in an abnormal condition based on a signal from detection device 300. Abnormal condition determination system 1 corresponds to one embodiment of the "abnormal condition determination system."

Motor 71 is, for example, a geared motor and rotates rotation shaft 48 of robot 30.

Servo amplifier 61 is connected to motor 71 provided on the shaft of robot 30 and drives motor 71 based on a command from robot control device 10. Servo amplifier 61 is connected to a motive power supply 60 with a first electromagnetic switch 62 and a second electromagnetic suit 63 being interposed. First electromagnetic switch 62 and second electromagnetic switch 63 are switched between on and off by robot control device 10. For example, first electromagnetic switch 62 and second electromagnetic switch 63 are opened while they are turned on and closed while they are turned off.

When first electromagnetic switch 62 and second electromagnetic switch 63 are closed, electric power from motive power supply 60 is supplied to servo amplifier 61. When first electromagnetic switch 62 or second electromagnetic switch 63 is opened, supply of electric power from motive power supply 60 to servo amplifier 61 is cut off. Servo amplifier 61 corresponds to one embodiment of the "drive apparatus."

Detection device 300 includes absolute encoder 100 and incremental encoder 200. Absolute encoder 100 and incremental encoder 200 share an encoder disc 47 and a power supply portion 46. Power supply portion 46 supplies electric power to each of absolute encoder 100 and incremental encoder 200 by using a voltage of an externally supplied direct-current (DC) voltage of 5 V. The external voltage of 5 V supplied to power supply portion 46 is by way of example and another voltage may be applied. Rotation shaft 48 is coupled to an open central portion of encoder disc 47 and encoder disc 47 rotates with rotation of rotation shaft 48. Encoder disc 47 corresponds to one embodiment of the "disc".

Absolute encoder 100 includes a first LED 101, a first optical sensor 102, a first signal processing circuit 103, and a first driver 104.

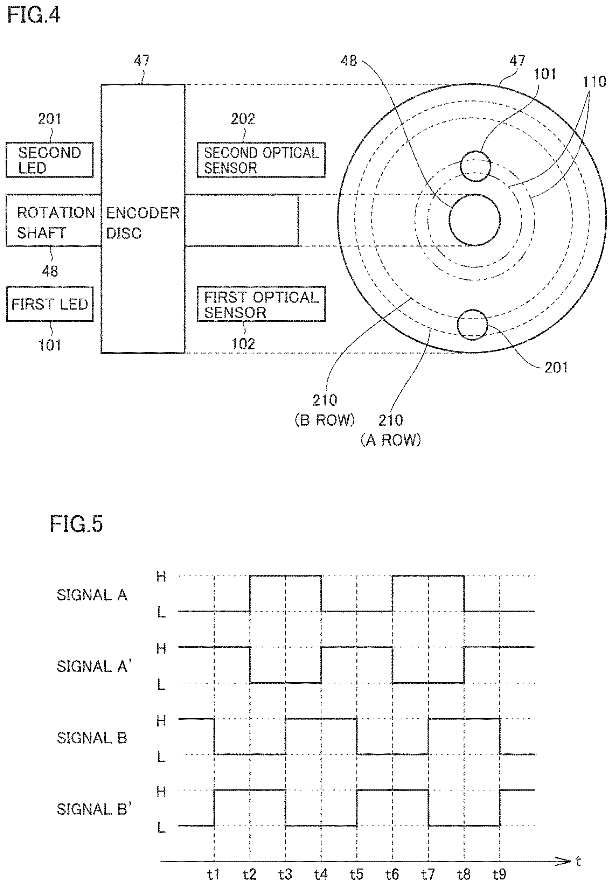

Fig. 4 is a diagram showing encoder disc 47 viewed laterally and from the front. As shown in Fig. 4, an absolute track 110 in which slits allowing passage of light are aligned at regular intervals is formed in a circumferential direction on an inner circumferential side of a surface of encoder disc 47. A pattern showing the origin where an absolute angle of rotation shaft 48 is at a zero degree is formed in absolute track 110.

Referring back to Fig. 3, first LED 101 emits light to a determined position on absolute track 110. First optical sensor 102 detects light which is emitted to absolute track 110 and has passed through the slits.

When first optical sensor 102 detects light which has passed through absolute track 110, it outputs a signal in accordance with detection of light to first signal processing circuit 103. First signal processing circuit 103 detects an absolute angle of rotation shaft 48 based on the signal received from first optical sensor 102 as well as on a position on absolute track 110 at which detected light has passed and the position of the origin determined in absolute track 110.

First signal processing circuit 103 outputs a signal indicating the detected absolute angle of rotation shaft 48 (which is also referred to as an absolute signal) to first driver 104. First driver 104 is driven by first signal processing circuit 103 and outputs the absolute signal received from first signal processing circuit 103 to abnormal condition determination device 50 through communication under RS485 standards. Absolute encoder 100 corresponds to one embodiment of the "absolute encoder portion."

Incremental encoder 200 includes a second LED 201, a second optical sensor 202, a second signal processing circuit 203, and a second driver 204.

As shown in Fig. 4, an incremental track 210 in which slits allowing passage of light are aligned at regular intervals is formed in the circumferential direction independently of and separately from absolute track 110 on an outer circumferential side of the surface of encoder disc 47. Incremental track 210 includes a pattern defined by two rows of an A row and a B row. Second LED 201 emits light to a determined position on incremental track 210. Second optical sensor 202 detects light which is emitted to incremental track 210 and has passed through the slits in each of the A row and the B row.

Referring back to Fig. 3, when second optical sensor 202 detects light which has passed through incremental track 210, it outputs a signal in accordance with detection of light to second signal processing circuit 203. Second signal processing circuit 203 generates a signal corresponding to detection of light which has passed through the slits in the A row in incremental track 210 (which is also referred to as an A-phase signal) and a signal corresponding to detection of light which has passed through the slits in the B row in incremental track 210 (which is also referred to as a B-phase signal) based on the signal received from second optical sensor 202.

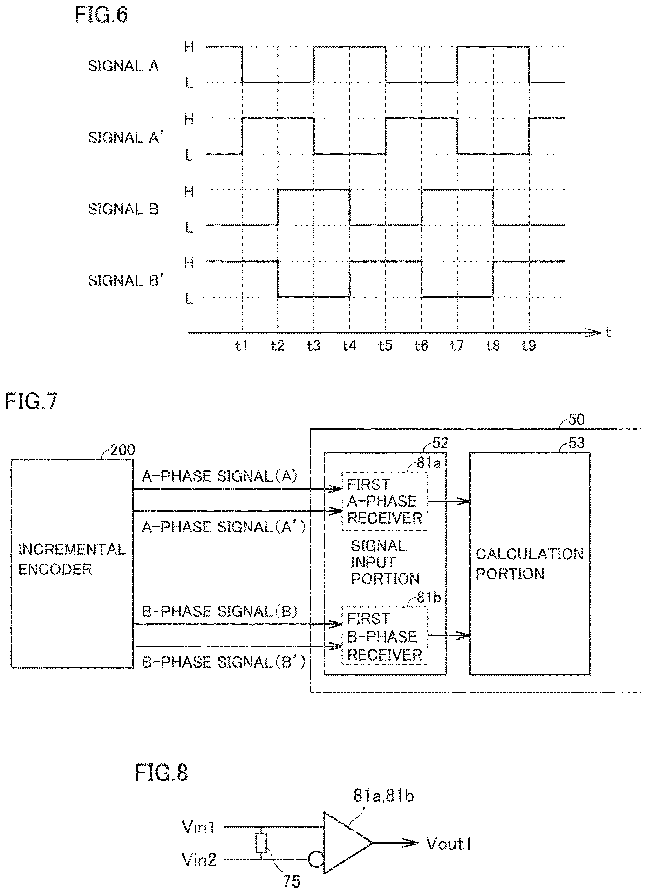

The A-phase signal and the B-phase signal will be described with reference to Figs. 5 and 6. Fig. 5 is a timing chart showing a pulse waveform of an A-phase signal and a B-phase signal when rotation shaft 48 rotates in a forward direction. Fig. 6 is a timing chart showing a pulse waveform of an A-phase signal and a B-phase signal when rotation shaft 48 rotates in a reverse direction.

The A-phase signal is a differential signal including a rectangular pulse. For example, as shown in Figs. 5 and 6, the A-phase signal is a differential signal in which a signal A and a signal A' are different from each other in polarity. Signal A maintains a high state (in Fig. 5, a state that a potential of the pulse attains to H, which is referred to as the H state below) as a result of rise of the pulse while the light which has passed through the slits in the A row is detected by second optical sensor 202, whereas it maintains a low state (in Fig. 5, a state that a potential of the pulse attains to L, which is referred to as the L state below) as a result of falling of the pulse while no light is detected by second optical sensor 202. Signal A' maintains the L state as a result of falling of the pulse while the light which has passed through the slits in the A row is detected by second optical sensor 202 whereas it maintains the H state as a result of rise of the pulse while no light is detected by second optical sensor 202.

For example, as shown in Fig. 5, when light which has passed through the slits in the A row is detected by second optical sensor 202 during a period from timing t2 to timing t4 and from timing t6 to timing t8, signal A attains to the H state and signal A' attains to the L state. During other periods for which no light is detected by second optical sensor 202, signal A attains to the L state whereas signal A' attains to the H state.

As shown in Fig. 6, when light which has passed through the slits in the A row is detected by second optical sensor 202 during a period from timing t3 to timing t5 and from timing t7 to timing t9, signal A attains to the H state and signal A' attains to the L state. During other periods for which no light is detected by second optical sensor 202, signal A attains to the L state whereas signal A' attains to the H state.

Similarly to the A-phase signal, the B-phase signal is a differential signal including a rectangular pulse. For example, as shown in Figs. 5 and 6, the B-phase signal is a differential signal in which a signal B and a signal B' are different from each other in polarity. In the present embodiment, the slits in the A row and the slits in the B row are aligned such that the B-phase signal is out of phase by 90 degrees with respect to the A-phase signal. Signal B maintains the H state as a result of rise of the pulse while light which has passed through the slits in the B row is detected by second optical sensor 202, whereas it maintains the L state as a result of falling of the pulse while no light is detected by second optical sensor 202. Signal B' maintains the L state as a result of falling of the pulse while light which has passed through the slits in the B row is detected by second optical sensor 202, whereas it maintains the H state as a result of rise of the pulse while light is detected by second optical sensor 202.

For example, as shown in Fig. 5, while light which has passed through the slits in the B row is detected by second optical sensor 202 during a period from timing t3 to timing t5 and from timing t7 to timing t9, signal B attains to the H state and signal B' attains to the L state. During other periods for which no light is detected by second optical sensor 202, signal B attains to the L state whereas signal B' attains to the H state.

As shown in Fig. 6, while light which has passed through the slits in the B row is detected by second optical sensor 202 during a period from timing t2 to timing t4 and from timing t6 to timing t8, signal B attains to the H state and signal B' attains to the L state. During other periods for which no light is detected by second optical sensor 202, signal B attains to the L state whereas signal B' attains to the H state.

When rotation shaft 48 rotates in the forward direction as shown in Fig. 5, signal A switches from the H state to the L state and thereafter signal B switches from the H state to the L state. For example, as shown in Fig. 5, signal A switches from the H state to the L state at timing t4, and thereafter signal B switches from the H state to the L state at timing t5.

When rotation shaft 48 rotates in the reverse detection as shown in Fig. 6, signal A switches from the H state to the L state and thereafter signal B switches from the L state to the H state. For example, as shown in Fig. 6, signal A switches from the H state to the L state at timing t5, and thereafter signal B switches from the L state to the H state at timing t6.

Thus, the A-phase signal and the B-phase signal are different from each other in number of generated pulses in accordance with an amount of rotation of rotation shaft 48. Furthermore, the A-phase signal and the B-phase signal are different from each other in timing of generation of the pulse depending on a direction of rotation of rotation shaft 48. Thus, the A-phase signal and the B-phase signal can indicate an amount of variation in angle of rotation of rotation shaft 48 in accordance with the number of generated pulses and the timing of generation of the pulses. An amount of variation in amount of rotation of rotation shaft 48 and direction of rotation of rotation shaft 48 (which can also be expressed as a relative angle and a speed of rotation) correspond to one embodiment of "an amount of variation in angle of rotation of the rotation shaft." The A-phase signal and the B-phase signal are also collectively referred to as an incremental signal.

Referring back to Fig. 3, second signal processing circuit 203 outputs the incremental signal to second driver 204. Second driver 204 is driven by second signal processing circuit 203 and outputs the incremental signal received from second signal processing circuit 203 to abnormal condition determination device 50 through communication under the RS422 standards. Incremental encoder 200 corresponds to one embodiment of the "incremental encoder portion."

Abnormal condition determination device 50 includes a reception portion 51, a signal input portion 52, a calculation portion 53, a first processor 54, and a second processor 55. Abnormal condition determination device 50 corresponds to one embodiment of the "abnormal condition determination device."

Reception portion 51 receives an absolute signal from absolute encoder 100 of detection device 300. Reception portion 51 outputs an angle signal 1 indicating an absolute angle of rotation shaft 48 detected based on the absolute signal to each of first processor 54 and second processor 55.

Signal input portion 52 receives an incremental signal from incremental encoder 200 of detection device 300. Signal input portion 52 outputs a signal indicating an amount of variation in angle of rotation of rotation shaft 48 detected based on the incremental signal to calculation portion 53.

A configuration of signal input portion 52 will be described with reference to Fig. 7. Fig. 7 is a diagram for illustrating an internal configuration of signal input portion 52. As shown in Fig. 7, signal input portion 52 includes a first A-phase receiver 81a which receives an A-phase signal (signal A and signal A') included in an incremental signal and a first B-phase receiver 81b which receives a B-phase signal (signal B and signal B'). First A-phase receiver 81a and first B-phase receiver 81b are also collectively referred to as a first receiver.

Fig. 8 is a diagram showing the first receiver. The first receiver shown in Fig. 8 corresponds to first A-phase receiver 81a and first B-phase receiver 81b. As shown in Fig. 8, the first receiver includes a Vin1 input portion to which signal A (signal B) is input, a Vin2 input portion to which signal A' (signal B') is input, and a terminal resistor 75 connected between the Vin1 input portion and the Vin2 input portion.

The first receiver further includes a Voutl output portion configured to output a high (H) or low (L) signal based on a differential voltage generated between signal A (signal B) input to the Vin1 input portion and signal A' (signal B') input to the Vin2 input portion.

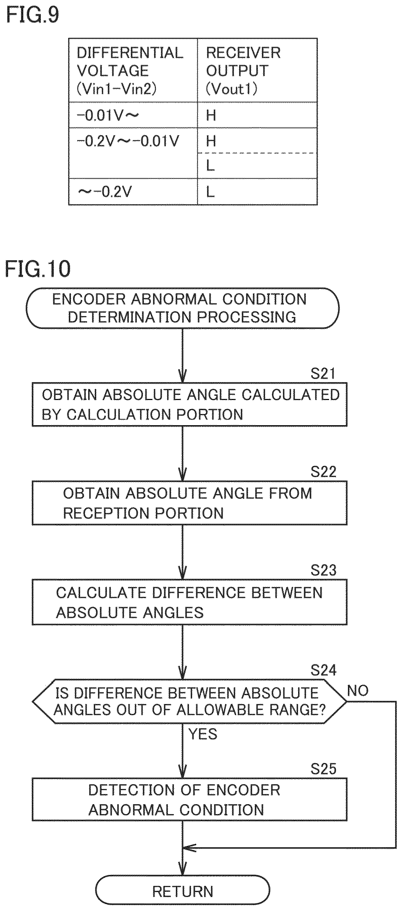

Fig. 9 is a diagram showing a truth-value table of the first receiver. As shown in Fig. 9, when a differential voltage exceeds -0.01 V, a high signal is output from the first receiver. While a differential voltage is from -0.2 V to -0.01 V, when the differential voltage is not lower than a prescribed threshold voltage (for example, a voltage around 0 V), a high signal is output from the first receiver, and when the differential voltage is lower than the threshold voltage, a low signal is output from the first receiver. When the differential voltage is lower than -0.2 V, a low signal is output from the first receiver. The first receiver thus outputs a high or low signal based on a differential voltage of the incremental signal. In particular, the first receiver is configured to output a high signal when a differential voltage is not lower than a voltage around 0 V. A value for the differential voltage shown in the truth-value table in Fig. 9 is by way of example and another value may also be applicable.

Calculation portion 53 is configured to detect an amount of variation in angle of rotation of rotation shaft 48 based on a high or low signal output from the first receiver (first A-phase receiver 81a or first B-phase receiver 81b) with reference to the truth-value table shown in Fig. 9. Specifically, calculation portion 53 detects one pulse when the signal from first A-phase receiver 81a or first B-phase receiver 81b switches from low to high and calculates an amount of rotation of rotation shaft 48 by counting the number of detected pulses. Calculation portion 53 determines a direction of rotation of rotation shaft 48 in accordance with difference in timing of generation of a pulse detected based on the signal from first A-phase receiver 81a and a pulse detected based on the signal from first B-phase receiver 81b. Calculation portion 53 calculates an absolute angle of rotation shaft 48 based on an amount of variation in angle of rotation indicated by the signal received from signal input portion 52 (an amount of rotation and a direction of rotation). Calculation portion 53 corresponds to one embodiment of the "calculation portion."

Referring back to Fig. 3, calculation portion 53 outputs an angle signal 2 indicating the calculated absolute angle of rotation shaft 48 to each of first processor 54 and second processor 55.

First processor 54 is configured to calculate a difference between the absolute angle indicated by angle signal 1 received from reception portion 51 and the absolute angle indicated by angle signal 2 received from calculation portion 53 and to determine whether or not a difference therebetween is out of an allowable range. When the difference between the absolute angle indicated by angle signal 1 and the absolute angle indicated by angle signal 2 is within the allowable range, first processor 54 determines that both of absolute encoder 100 and incremental encoder 200 in detection device 300 are normal. When the difference between the absolute angle indicated by angle signal 1 and the absolute angle indicated by angle signal 2 is out of the allowable range, first processor 54 determines that at least one of absolute encoder 100 and incremental encoder 200 in detection device 300 is in the abnormal condition. In this case, first processor 54 determines that detection device 300 is in an encoder abnormal condition.

Second processor 55 is configured to calculate a difference between the absolute angle indicated by angle signal 1 received from reception portion 51 and the absolute angle indicated by angle signal 2 received from calculation portion 53 and to determine whether or not a difference therebetween is out of the allowable range. When the difference between the absolute angle indicated by angle signal 1 and the absolute angle indicated by angle signal 2 is within the allowable range, first processor 54 determines that both of absolute encoder 100 and incremental encoder 200 in detection device 300 are normal. When the difference between the absolute angle indicated by angle signal 1 and the absolute angle indicated by angle signal 2 is out of the allowable range, second processor 55 determines that at least one of absolute encoder 100 and incremental encoder 200 in detection device 300 is in the abnormal condition. In this case, second processor 55 determines that detection device 300 is in the encoder abnormal condition. First processor 54 and second processor 55 correspond to one embodiment of the "determination portion." First processor 54 and second processor 55 are also collectively referred to as a processor.

In abnormal condition determination system 1 configured as above, abnormal condition determination device 50 detects the encoder abnormal condition by using the two detectors of absolute encoder 100 and incremental encoder 200 included in detection device 300 which are different in detection method.

Encoder abnormal condition determination processing by abnormal condition determination device 50 will now be described with reference to a flow in Fig. 10. Fig. 10 is a flowchart showing one example of encoder abnormal condition determination processing performed by abnormal condition determination device 50. The encoder abnormal condition determination processing shown in Fig. 10 is performed by the processor (first processor 54 and second processor 55) included in abnormal condition determination device 50.

Initially, the processor obtains an absolute angle of rotation shaft 48 calculated based on an amount of variation in angle of rotation of rotation shaft 48 indicated by an incremental signal from calculation portion 53 (S21). The processor obtains an absolute angle of rotation shaft 48 indicated by an absolute signal from reception portion 51 (S22).

The processor calculates a difference between the absolute angle of rotation shaft 48 obtained from calculation portion 53 and the absolute angle of rotation shaft 48 obtained from reception portion 51 (S23). When the difference between the absolute angles calculated in S23 is within an allowable range (NO in S24), the processor determines that no encoder abnormal condition has occurred and quits the present routine. When the difference between the absolute angles calculated in S23 is out of the allowable range (YES in S24), the processor detects the encoder abnormal condition (S25) and quits the present routine. The processing in S23 corresponds to one embodiment of the "calculation step." The processing in S24 and S25 corresponds to one embodiment of the "determination step."

As set forth above, abnormal condition determination system 1 includes detection device 300 configured to detect rotation of each rotation shaft 48 of robot 30 and abnormal condition determination device 50 configured to detect the encoder abnormal condition based on an absolute signal and an incremental signal from detection device 300. According to abnormal condition determination device 50, calculation portion 53 is configured to calculate an absolute angle of rotation shaft 48 based on an amount of variation in angle of rotation of rotation shaft 48 indicated by an incremental signal from incremental encoder 200 in detection device 300. Then, the processor is configured to determine whether or not the encoder abnormal condition has occurred based on comparison between the absolute angle calculated by calculation portion 53 and the absolute angle of rotation shaft 48 indicated by an absolute signal from absolute encoder 100 in detection device 300. Since determination as to the encoder abnormal condition is thus made by using two detectors of absolute encoder 100 and incremental encoder 200 different in detection method, determination as to the abnormal condition of detection device 300 can accurately be made.

Detection device 300 includes incremental encoder 200 and absolute encoder 100 in the same housing. Therefore, the two detectors different in detection method can together be arranged in a compact manner and replacement with an already provided encoder is also easy.

Encoder disc 47 is shared by absolute encoder 100 and incremental encoder 200. In encoder disc 47, absolute track 110 and incremental track 210 are formed independently of each other. Since the encoder disc for absolute encoder 100 and the encoder disc for incremental encoder 200 are thus in common, a substrate can be compact. As absolute track 110 and incremental track 210 are formed independently of each other on encoder disc 47, a failure in a signal track for one encoder does not affect operations by the other encoder.

Angle signal 1 from reception portion 51 and angle signal 2 from calculation portion 53 are output to both of first processor 54 and second processor 55. Determination as to the encoder abnormal condition is made in each of first processor 54 and second processor 55. Since determination as to the encoder abnormal condition is thus redundantly made in two processors, reliability in determination as to the encoder abnormal condition can be improved.

### [Processing in Encoder Abnormal Condition]

An encoder abnormal condition in which a difference between an absolute angle of rotation shaft 48 detected by absolute encoder 100 and an absolute angle of rotation shaft 48 calculated based on detection by incremental encoder 200 is out of an allowable range may be derived not from a failure of the encoder itself but merely by inaccurate calibration of absolute encoder 100 or incremental encoder 200. In this case, absolute encoder 100 or incremental encoder 200 should be calibrated with the encoder check function. When an encoder abnormal condition occurs, the obtained absolute angle of rotation shaft 48 is unreliable and hence the region monitoring function and the angle monitoring function cannot normally be performed. Then, initially, the region monitoring function and the angle monitoring function are manually deactivated by an operator. Since it is not that absolute encoder 100 itself and incremental encoder 200 itself have failed, when a difference between an amount of variation in angle of rotation of rotation shaft 48 detected by absolute encoder 100 and an amount of variation in angle of rotation of rotation shaft 48 detected by incremental encoder 200 is within an allowable range, obtained amount of variation in angle of rotation of rotation shaft 48 is reliable. In processing in the encoder abnormal condition described below, an amount of variation in angle of rotation of rotation shaft 48 detected by each of absolute encoder 100 and incremental encoder 200 (which can also be expressed as an amount of rotation, a direction of rotation, a relative angle, and a speed of rotation) is used. Processing in the encoder abnormal condition will specifically be described below.

When the processor of abnormal condition determination device 50 detects an encoder abnormal condition through the encoder abnormal condition determination processing, it has a not-shown notification portion notify an operator of an error. When the operator recognizes the notification of the error, the operator operates region deactivation switch 17 and angle deactivation switch 18 in order to deactivate the region monitoring function and the angle monitoring function. This is because the region monitoring function and the angle monitoring function cannot normally be performed when the encoder abnormal condition occurs. The region monitoring function and the angle monitoring function are thus deactivated by an action by the operator himself/herself.

The operator has robot control device 10 move robot 30 to the vicinity of encoder check switch 19 in order to perform the encoder check function of robot control device 10.

When robot 30 moves to the vicinity of encoder check switch 19 in order to secure safety of the operator, a moving speed of robot 30, in particular, a moving speed of tool 31 located at the tip end portion of the arm provided with end effector 40, should be restricted to a speed lower than in a normal operation.

A moving speed of tool 31 can be calculated from an absolute angle of each rotation shaft 48. When the encoder abnormal condition (inaccurate calibration) occur, however, the obtained absolute angle of each rotation shaft 48 is not reliable and cannot be used. Even though the encoder abnormal condition occurs, however, obtained amount of variation in angle of rotation of each rotation shaft 48 is reliable and can be used. A moving speed of tool 31 can be calculated also from a speed of rotation around the R axis, the O axis, and the D axis and a distance from the center of each rotation shaft 48 to tool 31. A speed of rotation of each rotation shaft 48 can be calculated based on obtained amount of variation in angle of rotation of rotation shaft 48, however, if two or more shafts simultaneously rotate, a moving speed of tool 31 cannot accurately be calculated.

Then, the processor calculates a speed of rotation of rotation shaft 48 with only one rotation shaft 48 having rotated. Specifically, when two or more rotation shafts 48 rotate while robot control device 10 has robot 30 move to the vicinity of encoder check switch 19, the processor stops robot 30 by opening first electromagnetic switch 62 and second electromagnetic switch 63 to cut off supply of electric power to servo amplifier 61. The processor can thus calculate a speed of rotation of rotation shaft 48 with only one rotation shaft 48 having rotated.

A distance from the center of rotation shaft 48 permitted to rotate to tool 31 cannot be calculated unless a current position of tool 31 is known. Therefore, when an absolute angle of rotation shaft 48 cannot be used, a distance from the center of rotation shaft 48 permitted to rotate to tool 31 cannot be calculated.

The processor assumes a condition that tool 31 is farthest from the center of the shaft along rotation shaft 48 permitted to rotate and predicts (calculates) a moving speed of tool 31 by using a distance from the center of the shaft to tool 31 along rotation shaft 48 in this case.

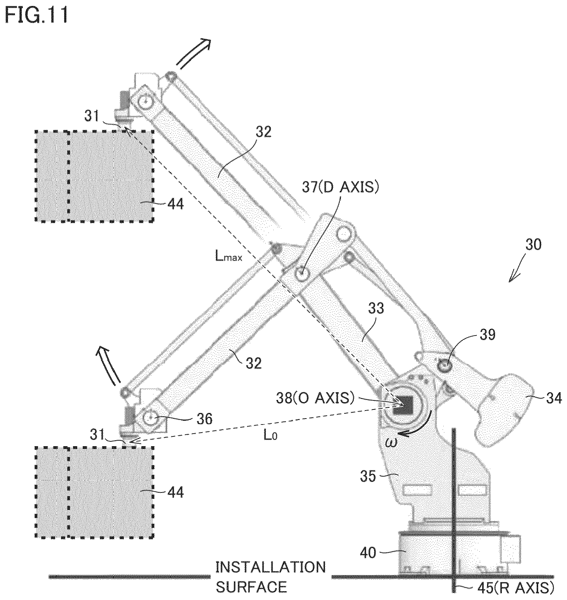

One example of calculation of a moving speed by the processor in abnormal condition determination device 50 will be described with reference to Fig. 11. Fig. 11 is a diagram for illustrating calculation of a moving speed of tool 31 while only pivot around the O axis is permitted.

As shown in Fig. 11, actually, the arm is bent around the D axis. Therefore, an actual distance from the center of the O axis around which pivot is permitted to tool 31 is L0. In this case, a moving speed of tool 31 is expressed as ωL0 calculated as a product of distance L0 from the center of the O axis to tool 31 and a speed of rotation around the O axis (an angular velocity ω). The moving speed of tool 31 varies depending on a distance from the center of the O axis to tool 31.

The distance from the center of the O axis to tool 31, however, cannot be calculated based on obtained amount of variation in angle of rotation of rotation shaft 48. Then, the processor assumes a condition that tool 31 is farthest from the center of the O axis and uses a maximum distance Lmax from the center of the O axis to tool 31 in this case. Maximum distance Lmax of the arm is stored in advance in a not-shown storage. By using maximum distance Lmax of the arm in calculation of a moving speed of tool 31, a maximum moving speed at which a moving speed of tool 31 is highest can be calculated, and a moving speed of tool 31 can be suppressed by restricting the maximum moving speed.

The processor obtains angular speed ω by calculating a rotation speed of rotation shaft 48 around the O axis from obtained amount of variation in angle of rotation of rotation shaft 48 and calculates a maximum moving speed ωLmax of tool 31 based on a product of angular speed ω and maximum distance Lmax of the arm stored in advance. Maximum moving speed ωLmax of tool 31 is a maximum moving speed of tool 31 predicted from a speed of rotation around the O axis when pivot only around the O axis is permitted.

When maximum moving speed ωLmax of tool 31 exceeds a speed limit, the processor has robot 30 stopped by opening first electromagnetic switch 62 and second electromagnetic switch 63 to cut off supply of electric power to servo amplifier 61. The speed limit is set to a speed up to which safety of an operator can be secured. A moving speed of tool 31 may be calculated with the method described above also when pivot only around the R axis is permitted or when pivot only around the D axis is permitted, without being limited to the O axis. The processor can thus restrict the moving speed of tool 31 to a low speed. For calculation of a rotation speed of rotation shaft 48 permitted to rotate, the amount of variation in angle of rotation of rotation shaft 48 obtained based on an incremental signal or the amount of variation in angle of rotation of rotation shaft 48 obtained based on an absolute signal may be used.

By keeping maximum moving speed ωLmax below the speed limit as above, robot 30 moves to the vicinity of encoder check switch 19 while a moving speed of tool 31 is restricted to a low speed not higher than a prescribed speed with only one rotation shaft always rotating. With the encoder check function of robot control device 10, absolute encoder 100 and incremental encoder 200 are calibrated.

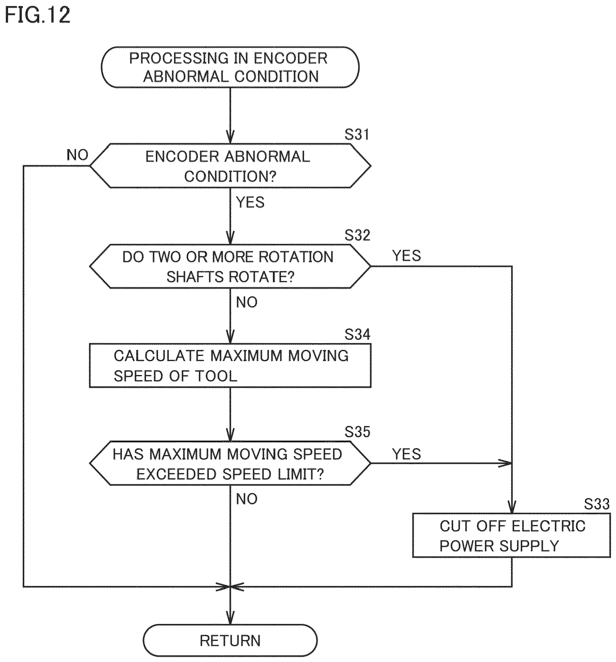

Processing in the encoder abnormal condition in abnormal condition determination device 50 will now be described with reference to a flow in Fig. 12. Fig. 12 is a flowchart showing one example of processing in the encoder abnormal condition performed by abnormal condition determination device 50. The processing in the encoder abnormal condition shown in Fig. 12 is performed at prescribed periodic intervals (for example, every 10 msec.) by the processor (first processor 54 and second processor 55) included in abnormal condition determination device 50.

Initially, the processor determines whether or not an encoder abnormal condition (inaccurate calibration) has occurred (S31). When no encoder abnormal condition has occurred (NO in S31), the processor quits the present routine. When an encoder abnormal condition has occurred (YES in S31), the processor determines whether or not two or more rotation shafts 48 rotate (S32).

When two or more rotation shafts 48 rotate (YES in S32), the processor cuts off supply of electric power to servo amplifier 61 (S33) and quits the present routine. When two or more rotation shafts 48 do not rotate (NO in S32), the processor calculates a maximum moving speed of tool 31 (S34). The calculation method is as described above with reference to Fig. 11.

The processor determines whether or not a calculated maximum moving speed of tool 31 has exceeded a speed limit (S35). When the maximum moving speed of tool 31 has exceeded the speed limit (YES in S35), the processor cuts off supply of electric power to servo amplifier 61 (S33) and quits the present routine. When the moving speed of tool 31 has not exceeded the speed limit (NO in S35), the processor quits the present routine.

As set forth above, according to abnormal condition determination device 50, when an encoder abnormal condition has occurred, a maximum moving speed of tool 31 is predicted assuming a condition that one rotation shaft 48 has rotated and tool 31 is farthest from the center of one rotating rotation shaft 48. Therefore, a maximum moving speed of tool 31 can accurately be predicted and a maximum moving speed higher than an actual moving speed of tool 31 is predicted. When the calculated maximum moving speed of tool 31 exceeds a speed limit, supply of electric power to servo amplifier 61 is cut off. Therefore, an actual moving speed of tool 31 does not exceed the speed limit and safety of an operator can be secured.

When an encoder abnormal condition has occurred, supply of electric power to servo amplifier 61 is cut off when two or more rotation shafts 48 rotate. Therefore, a moving speed of tool 31 can be predicted with one rotation shaft 48 reliably rotating.

### [Specific Abnormal Condition Determination Processing]

By configuring above-described detection device 300 as will be described below, an abnormal condition of a signal path such as a break and short-circuiting and an abnormal condition such as an abnormal condition of a power supply (which is also referred to as a specific abnormal condition) can also be detected in addition to the encoder abnormal condition.

Determination as to short-circuiting and a break in a signal path between absolute encoder 100 and reception portion 51 will initially be described. When at least one of a break and short-circuiting occurs in the signal path between absolute encoder 100 and reception portion 51, communication between first driver 104 and reception portion 51 is not established.

The processor in abnormal condition determination device 50 determines that at least one of short-circuiting and a break has occurred when failure in establishment of communication between first driver 104 and reception portion 51 lasts for a long period of time and a duration thereof exceeds a limit time.

Determination as to an abnormal condition of the power supply which occurs in absolute encoder 100 will now be described. In absolute encoder 100, power supply portion 46 applies a voltage of 3 V to first signal processing circuit 103 and applies a voltage of 5 V to first driver 104. The voltages supplied from power supply portion 46 to first signal processing circuit 103 and first driver 104 are by way of example and another voltage may be applied. Power supply portion 46 monitors the voltages applied to first signal processing circuit 103 and first driver 104. When an abnormal condition of the power supply of 3 V occurs in first signal processing circuit 103, power supply portion 46 controls an enable terminal (which is not shown) of first driver 104 and cuts off the signal path between first driver 104 and reception portion 51. When an abnormal condition of the power supply of 5 V occurs in first driver 104, power supply portion 46 uses a fuse (which is not shown) to cut off supply of electric power to an internal circuit including first driver 104 and to cut off the signal path between first driver 104 and reception portion 51. The signal path from first driver 104 to reception portion 51 is thus cut off as in a break and short-circuiting, and communication between first driver 104 and reception portion 51 is not established.

The processor of abnormal condition determination device 50 determines that a specific abnormal condition such as an abnormal condition of the power supply has occurred when failure in establishment of communication between first driver 104 and reception portion 51 lasts for a long period of time and a duration thereof exceeds a limit time.

Determination as to short-circuiting and a break in a signal path between incremental encoder 200 and signal input portion 52 will now be described. In the case of incremental encoder 200, unlike absolute encoder 100, communication is not always established in a normal condition but the processor can recognize only generation of a pulse with rotation of rotation shaft 48. Therefore, determination as to short-circuiting and a break is made with a method described below for incremental encoder 200.

Initially, when a break or short-circuiting occurs in the signal path between incremental encoder 200 and signal input portion 52, no pulse is generated in an incremental signal and no differential voltage is generated.

As described with reference to Fig. 9, the first receiver of signal input portion 52 outputs a high signal when a differential voltage is around 0 V. Signal input portion 52 outputs a high signal even when a differential voltage significantly exceeds 0 V. Even when the differential voltage significantly exceeds 0 V while rotation shaft 48 remains stopped or when the differential voltage is around 0 V due to occurrence of short-circuiting or a break, signal input portion 52 may output a high signal in each case. Therefore, when signal input portion 52 is configured as shown in Fig. 7, the processor cannot determine whether rotation shaft 48 remains stopped or short-circuiting or a break has occurred.

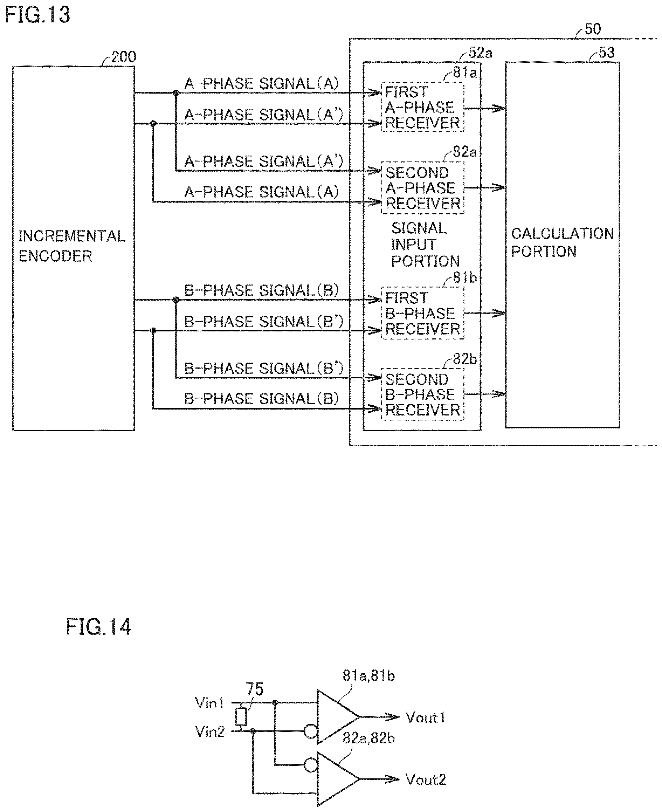

In order to detect a specific abnormal condition such as short-circuiting, signal input portion 52 is configured as a signal input portion 52a shown in Fig. 13.

Fig. 13 is a diagram for illustrating an internal configuration of signal input portion 52a. As shown in Fig. 13, signal input portion 52a includes in addition to first A-phase receiver 81a and first B-phase receiver 81b, a second A-phase receiver 82a which receives an A-phase signal (signal A and signal A') included in an incremental signal with a polarity thereof being inverted and a second B-phase receiver 82b which receives a B-phase signal (signal B and signal B') with a polarity thereof being inverted. Second A-phase receiver 82a and second B-phase receiver 82b are also collectively referred to as a second receiver. When first A-phase receiver 81a corresponds to one embodiment of the "first input and output portion," second A-phase receiver 82a corresponds to one embodiment of the "second input and output portion." When first B-phase receiver 81b corresponds to one embodiment of the "first input and output portion," second B-phase receiver 82b corresponds to one embodiment of the "second input and output portion."

Fig. 14 is a diagram showing the first receiver and the second receiver. As shown in Fig. 14, the second receiver includes a Vin1 input portion to which signal A' (signal B') is input, a Vin2 input portion to which signal A (signal B) is input, and terminal resistor 75 connected between the Vin1 input portion and the Vin2 input portion. An incremental signal input to the first receiver and an incremental signal input to the second receiver are opposite in polarity. The first receiver and the second receiver share terminal resistor 75 between the Vin1 input portion and the Vin2 input portion which are input sides.

The second receiver includes a Vout2 output portion configured to output a high (H) or low (L) signal based on a differential voltage generated between signal A' (signal B') input to the Vin1 input portion and signal A (signal B) input to the Vin2 input portion.

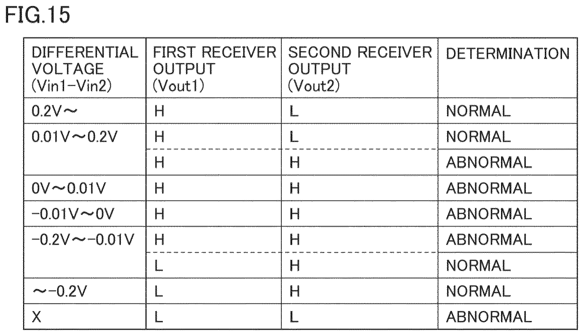

Fig. 15 is a diagram showing a truth-value table of the first receiver and the second receiver. As shown in Fig. 15, when a differential voltage exceeds 0.2 V, a low signal is output from an output of the second receiver. While the differential voltage is from 0.01 V to 0.2 V, when the differential voltage is not lower than a prescribed threshold voltage (for example, a voltage around 0V), a low signal is output from the second receiver, and when the differential voltage is lower than the threshold voltage, a high signal is output from the second receiver. When the differential voltage is lower than 0.01 V, a high signal is output from the output of the second receiver. The second receiver thus outputs a high or low signal based on a differential voltage of the incremental signal. In particular, the second receiver is configured to output a low signal when the differential voltage is not lower than a voltage around 0 V. The truth-value table for the first receiver is similar to the truth-value table shown in Fig. 9. A value for the differential voltage shown in the truth-value table in Fig. 15 is by way of example and another value may also be applicable.

According to the configuration of signal input portion 52a, the incremental signal input to the first receiver and the incremental signal input to the second receiver are opposite in polarity to each other. Therefore, a signal output from the first receiver and a signal output from the second receiver should be opposite in polarity to each other.

The processor determines the polarity opposite between the signal output from the first receiver and the signal output from the second receiver as being normal, whereas it determines the polarity being the same between the signal output from the first receiver and the signal output from the second receiver as an abnormal condition such as a specific abnormal condition.

Specifically, when a high signal is output from both of the first receiver and the second receiver, the processor determines that an abnormal condition such as a specific abnormal condition has occurred. As shown in Fig. 15, when a high signal is output from both of the first receiver and the second receiver, a differential voltage is around 0 V also in the incremental signals received in each of the first receiver and the second receiver. Therefore, the processor determines that the specific abnormal condition such as short-circuiting and a break has occurred when the high signal is output from both of the first receiver and the second receiver. When a low signal is output from both of the first receiver and the second receiver, the processor determines that an abnormal condition other than the specific abnormal condition such as an abnormal condition of a circuit in incremental encoder 200 has occurred. Though calculation portion 53 is connected between signal input portion 52a and the processor, the processor can detect a signal from signal input portion 52a through calculation portion 53.

Determination as to an abnormal condition of the power supply which occurs in incremental encoder 200 will now be described. In incremental encoder 200, power supply portion 46 applies a voltage of 3 V to second signal processing circuit 203 and applies a voltage of 5 V to second driver 204. The voltages supplied from power supply portion 46 to second signal processing circuit 203 and second driver 204 are by way of example and another voltage may be applied. Power supply portion 46 monitors the voltages applied to second signal processing circuit 203 and second driver 204. When an abnormal condition of the power supply occurs, in which behavior an incremental signal is output is unpredictable.

When an abnormal condition of the power supply of 3 V occurs in second signal processing circuit 203, power supply portion 46 controls an enable terminal (which is not shown) of second driver 204 to cut off a signal path between second driver 204 and signal input portion 52. When an abnormal condition of the power supply of 5 V occurs in second driver 204, power supply portion 46 uses a fuse (which is not shown) to cut off supply of electric power to an internal circuit including second driver 204 and to cut off the signal path between second driver 204 and signal input portion 52. A state of output of an incremental signal from second driver 204 is in a high-impedance state and a differential voltage of the incremental signal is around 0 V owing to terminal resistor 75 provided in each of the first receiver and the second receiver. Thus, incremental encoder 200 sets a differential voltage of the incremental signal to the vicinity of 0 V by setting a state of output of the incremental signal to the high-impedance state when the abnormal condition of the power supply occurs, and is able to detect the abnormal condition of the power supply by means of signal input portion 52a as in short-circuiting and a break.

The processor of abnormal condition determination device 50 detects a specific abnormal condition such as an abnormal condition of the power supply based on the truth-value table shown in Fig. 15 as in the case of short-circuiting and a break.

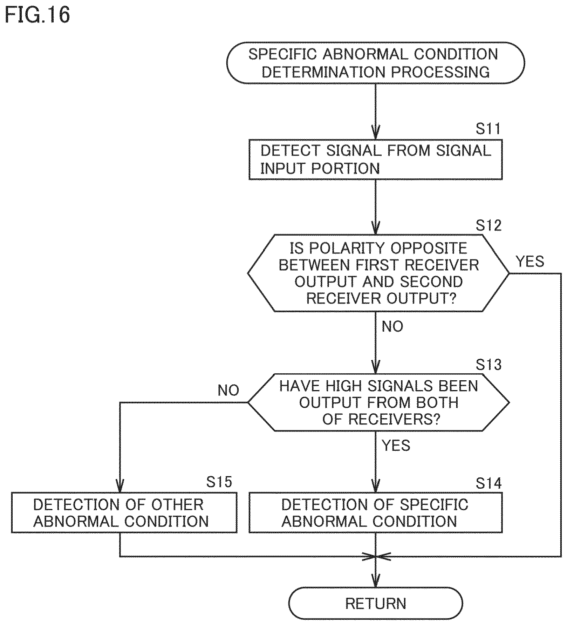

Specific abnormal condition determination processing in abnormal condition determination device 50 will now be described with reference to a flow in Fig. 16. Fig. 16 is a flowchart showing one example of specific abnormal condition determination processing performed by abnormal condition determination device 50. The specific abnormal condition determination processing shown in Fig. 16 is performed by the processor (first processor 54 and second processor 55) included in abnormal condition determination device 50.

Initially, the processor detects a signal from signal input portion 52a (S11). The processor determines whether or not the polarity is opposite between the signal output from the first receiver and the signal output from the second receiver, based on the detected signal (S12).

When the polarity is opposite between the signal output from the first receiver and the signal output from the second receiver (YES in S12), the processor determines that no abnormal condition such as a specific abnormal condition has occurred and quits the present routine. When the polarity is not opposite between the signal output from the first receiver and the signal output from the second receiver (NO in S12), the processor determines whether or not the signals output from the first receiver and the second receiver are both high signals (S13).

When the signals output from the first receiver and the second receiver are both the high signal (YES in S13), the processor detects a specific abnormal condition (S14) and quits the present routine. When the signals output from the first receiver and the second receiver are both low signals (NO in S13), the processor detects an abnormal condition other than the specific abnormal condition (S15) and quits the present routine.

As set forth above, when at least one of a break and short-circuiting occurs in the signal path between incremental encoder 200 and abnormal condition determination device 50, an incremental signal output from second driver 204 is around 0 V without a differential voltage being generated. When an abnormal condition of the power supply has occurred in incremental encoder 200, power supply portion 46 renders a state of output of the incremental signal to the high-impedance state and a differential voltage of the incremental signal is around 0 V. When a signal output from the first receiver and a signal output from the second receiver are not opposite in polarity, the processor of abnormal condition determination device 50 can detect a specific abnormal condition such as a break and short-circuiting. A specific abnormal condition such as a break, short-circuiting, and an abnormal condition in the power supply which has occurred in incremental encoder 200 can thus be detected by making use of a differential voltage of the incremental signal output from incremental encoder 200.

### [Modification]

Though a main embodiment in the present invention has been described above, the present invention is not limited to the embodiment above.

In the present embodiment, such a configuration that robot control device 10 controls servo amplifier 61 to have robot 30 operate and robot control device 10 has the region monitoring function, the angle monitoring function, and the encoder check function has been described. Limitation thereto, however, is not intended, and robot control device 10 may have a function to operate a robot under the control of servo amplifier 61 and an operation control device representing another device (which is not shown) may have the region monitoring function, the angle monitoring function, and the encoder check function. Namely, the operation control device may monitor operations by robot 30 operated under the control by robot control device 10. Abnormal condition determination device 50 may be provided in robot control device 10 or the operation control device.

In the present embodiment, abnormal condition determination device 50 is provided in each rotation shaft 48 of motor 71 of robot 30. Limitation thereto, however, is not intended, and one abnormal condition determination device 50 alone may be provided for rotation shafts 48 of a plurality of motors 71. Abnormal condition determination device 50 may be configured to perform encoder abnormal condition determination processing based on each signal received from each detection device 300.

In the present embodiment, a maximum moving speed of tool 3 1 is calculated and determined in processing in the encoder abnormal condition shown in Fig. 12. A maximum moving speed of another member at the tip end portion of the arm, however, may be calculated and determined without being limited to tool 31. For example, a maximum moving speed of a central portion of end effector 44 or a tip end of end effector 44 may be calculated and determined.

In the present embodiment, the first receiver and the second receiver are configured to output high signals when a differential voltage of an incremental signal is around 0 V. Limitation thereto, however, is not intended, and the first receiver and the second receiver may output low signals when a differential voltage of the incremental signal is around 0 V. In this case, in specific abnormal condition determination processing shown in Fig. 16, a specific abnormal condition is detected when both of the first receiver and the second receiver output the low signals.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

1 abnormal condition determination system; 10 robot control device; 30 robot; 47 encoder disc; 48 rotation shaft; 50 abnormal condition determination device; 71 motor; 100 absolute encoder; 200 incremental encoder; and 300 detection device

## Claims

1. A system for determining an abnormal condition of a detection device configured to detect rotation of at least one rotation shaft of a movable apparatus, the system comprising:
the detection device; and
an abnormal condition determination device configured to determine whether the detection device is in an abnormal condition based on a signal from the detection device,
the detection device including in a single housing,
an incremental encoder portion configured to output an incremental signal indicating an amount of variation in angle of rotation of the at least one rotation shaft, and
an absolute encoder portion configured to output an absolute signal indicating an absolute angle of the at least one rotation shaft,
the abnormal condition determination device being configured
to calculate an absolute angle of the at least one rotation shaft based on the amount of variation in angle of rotation of the at least one rotation shaft indicated by the incremental signal from the incremental encoder portion, and
to determine that the detection device is in the abnormal condition when a difference between the absolute angle of the at least one rotation shaft calculated based on the incremental signal and the absolute angle of the at least one rotation shaft indicated by the absolute signal from the absolute encoder portion is out of an allowable range.

2. The system for determining an abnormal condition of the detection device according to claim 1, wherein
the incremental encoder portion is configured to output a differential signal including a pulse as the incremental signal,
no differential voltage is generated in the incremental signal when an abnormal condition of a signal path between the incremental encoder portion and the abnormal condition determination device occurs,
the abnormal condition determination device includes
a first input and output portion configured to receive the incremental signal from the incremental encoder portion without inverting a polarity and to output a high or low signal based on a differential voltage of the received incremental signal, and
a second input and output portion configured to receive the incremental signal from the incremental encoder portion with the polarity being inverted and to output a high or low signal based on the differential voltage of the received incremental signal, and
the abnormal condition determination device is configured to detect the abnormal condition of the signal path based on a signal from the first input and output portion and a signal from the second input and output portion.

3. The system for determining an abnormal condition of the detection device according to claim 1 or 2, wherein
the incremental encoder portion is configured to output a differential signal including a pulse as the incremental signal and to prevent generation of a differential voltage of the incremental signal by setting a state of output of the incremental signal to a high-impedance state when an abnormal condition of a power supply occurs in the incremental encoder portion,
the abnormal condition determination device includes
a first input and output portion configured to receive the incremental signal from the incremental encoder portion without inverting a polarity and to output a high or low signal based on a differential voltage of the received incremental signal, and
a second input and output portion configured to receive the incremental signal from the incremental encoder portion with the polarity being inverted and to output a high or low signal based on the differential voltage of the received incremental signal, and
the abnormal condition determination device is configured to detect the abnormal condition of the power supply which has occurred in the incremental encoder portion based on a signal from the first input and output portion and a signal from the second input and output portion.

4. The system for determining an abnormal condition of the detection device according to any one of claims 1 to 3, wherein
the movable apparatus includes a plurality of the rotation shafts and an arm configured to operate with rotation of at least one rotation shaft of the plurality of the rotation shafts, and
when the abnormal condition determination device determines that the detection device is in the abnormal condition, while the arm operates with the at least one rotation shaft having rotated, the abnormal condition determination device is configured
to predict a moving speed of a tip end portion of the arm under a condition that the tip end portion is farthest from a center of the at least one rotated rotation shaft, and
to cut off electric power supply to a drive apparatus configured to drive the movable apparatus when the predicted moving speed of the tip end portion exceeds a speed limit.

5. The system for determining an abnormal condition of the detection device according to claim 4, wherein
when the abnormal condition determination device determines that the detection device is in the abnormal condition, the abnormal condition determination device is configured to cut off electric power supply to the drive apparatus when two or more rotation shafts rotate.

6. The system for determining an abnormal condition of the detection device according to any one of claims 1 to 5, wherein
the absolute encoder portion is configured to detect the absolute angle of the at least one rotation shaft by using a disc configured to rotate with rotation of the at least one rotation shaft, and
the incremental encoder portion is configured to detect the amount of variation in angle of rotation of the at least one rotation shaft by using the disc which is used by the absolute encoder portion in detection of the absolute angle of the at least one rotation shaft.

7. A detection device configured to detect rotation of a rotation shaft, the detection device comprising in a single housing:
an incremental encoder portion configured to output an incremental signal indicating an amount of variation in angle of rotation of the rotation shaft; and
an absolute encoder portion configured to output an absolute signal indicating an absolute angle of the rotation shaft.

8. A device configured to determine an abnormal condition of a detection device configured to detect rotation of a rotation shaft, the device comprising:
a calculation portion configured to calculate an absolute angle of the rotation shaft based on an amount of variation in angle of rotation of the rotation shaft indicated by an incremental signal from an incremental encoder portion included in the detection device; and
a determination portion configured to determine that the detection device is in the abnormal condition when a difference between the absolute angle of the rotation shaft calculated by the calculation portion and an absolute angle of the rotation shaft indicated by an absolute signal from an absolute encoder portion included in the detection device is out of an allowable range.

9. A method of determining an abnormal condition of a detection device configured to detect rotation of a rotation shaft, the method comprising:
a calculation step of calculating an absolute angle of the rotation shaft based on an amount of variation in angle of rotation of the rotation shaft indicated by an incremental signal from an incremental encoder portion included in the detection device; and
a determination step of determining that the detection device is in an abnormal condition when a difference between the absolute angle of the rotation shaft calculated in the calculation step and an absolute angle of the rotation shaft indicated by an absolute signal from an absolute encoder portion included in the detection device is out of an allowable range.
